(19)

Europäisches Patentamt
European Patent Office
Office européen des brevets

(11)  **EP 4 306 281 A1**

(12)  **EUROPEAN PATENT APPLICATION**

(43) Date of publication:
    **17.01.2024  Bulletin 2024/03**

(21) Application number: **23184430.9**

(22) Date of filing: **10.07.2023**

(51) International Patent Classification (IPC):
    **B27M 1/08** *(2006.01)*      **B23D 59/00** *(2006.01)*
    **B23K 7/10** *(2006.01)*      **B27B 5/06** *(2006.01)*

(52) Cooperative Patent Classification (CPC):
    **B27M 1/08; B23D 59/001; B23D 59/008;
    B23K 7/105; B27B 5/06**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **KH MA MD TN**

(30) Priority:  **14.07.2022  IT 202200014830**

(71) Applicant: **SCM Group S.p.A.
    47921 Rimini (RN) (IT)**

(72) Inventors:
    • **MARTELLI, Giuseppe
      47921 RIMINI (RN) (IT)**
    • **CECCHI, Marco
      47921 RIMINI (RN) (IT)**
    • **AMADORI, Davide
      47921 RIMINI (RN) (IT)**

(74) Representative: **Tiburzi, Andrea et al
    Barzanò & Zanardo Roma S.p.A.
    Via Piemonte 26
    00187 Roma (IT)**

(54)  **METHOD FOR THE IMPROVED CUTTING OF PANELS AND WORKING CENTER THAT IMPLEMENTS SUCH METHOD**

(57)  The present invention relates to a method for cutting a panel (P), such as a panel made of wood, plastic, fiberglass and the like, wherein said panel (P) is arranged on a plane wherein said panel (P) has to be cut into a plurality of pieces (Ri), and wherein for each piece (Ri) to be cut by means of a cutting tool, such as a cutter and similar, said method comprises the step of: B. determining the starting point of a cutting path of each piece (Ri), so as to maximize the holding of said piece (Ri) during its cutting.

The present invention also relates to a working center (1) configured to carry out the method for cutting a panel (P).

Fig. 12

EP 4 306 281 A1

## Description

The present invention relates to a method for the improved cutting of panels and working center implementing such a method.

## Field of invention

More specifically, the invention relates to an improved method of cutting wood, fiberglass, plastic, and similar panels, in particular for the so-called nesting, which allows keeping in position even small parts to be cut out in the actual cutting steps and which can be used in any other case where it is necessary to keep in position parts of a wooden panel, or of the other materials mentioned above, of reduced dimensions compared to the panel itself.

In the following, the description will be directed to the nesting-type cutting of wooden panels, but it is clear that the same should not be considered limited to this specific use.

## Prior art

As is well known, currently there are, in the machine tool sector, machining centers for carrying out machining on panels such as to allow parts of different sizes and shapes to be obtained from a panel. These obtained parts are used above all in the fields of furniture making, interior fittings, and the like.

In literal terms "nesting" would mean nesting. Generally in the sector at issue the possibility of obtaining parts of panels with particular shapes is meant, to maximize the panel's yield, or minimize the possible waste.

In general, panel working machines have a base, a support surface for at least one panel, arranged on the base, a movable bridge along the base, generally positioned above the surface, and a multifunction machining unit, which equips at least one machining tool for machining the panel.

The panel to be worked rests on a sacrificial panel and is held in position by means capable of creating vacuum. The panel to be machined is placed on top of the sacrificial panel, which in its turn is placed on top of the means for making the vacuum. By transpiration through the sacrificial panel, the panel to be worked is held in place.

Usually, the working tool is a cutter, such as an endmill, suitable for drilling and cutting out the required panel parts. The endmill is moved and driven following a cutting pattern as mentioned to maximize the use of the panel, reducing the waste to a minimum.

The cutting patterns are generally calculated and obtained using suitable and known so-called optimization software.

The effective cut, once the panel is placed on the working surface, is carried out according to a cutting sequence determined by the computer.

The machining tool, i.e., the end mill, is a rotating tool, which rotates at high speed. The high rotation speed of the end mill stresses the part of the panel to be cut out. A technical problem in the industry is the fact that if the part to be cut out is small, the force that holds this part to be cut out, i.e., the vacuum effect on the piece through the sacrificial panel, is reduced.

Therefore, the stress of the working tool (the end mill) could cause the piece's displacement to be cut out itself, and therefore an incorrect cut of the same.

In case of one or more pieces were moved, the correct cutting of the subsequent pieces could also be compromised and therefore the effective performance of the panel.

It is clear that this procedure is onerous in economic and production process terms.

## Scope of the invention

In light of the above, it is, therefore, an object of the present invention proposing a method or cutting sequences, which allow keeping the pieces to be obtained from a panel in the predetermined position during the cutting or milling operations.

Another object of the invention is to allow the realization of the optimized cuts obtained from different optimization software.

## Object of the invention

It is, therefore, specific object of the present invention a method for cutting a panel, such as a panel made of wood, plastic, fiberglass and the like, wherein said panel is arranged on a plane wherein said panel has to be cut into a plurality of pieces, and wherein for each piece to be cut by means of a cutting tool, such as a cutter and similar, said method comprises the step of: B. determining the starting point of a cutting path of each piece, so as to maximize the holding of said piece during its cutting.

Always according to the invention, said step B may comprise, for each piece to be cut out, the following sub-steps: B1. determining a starting point of the cut; B2. defining the material surrounding ranges; and B3. selecting the starting side of the cut.

Still according to the invention, in said step B1 the initial cutting point may be the central point of one side of the piece.

Advantageously according to the invention, said step B2 may comprise the step of determining, for each side of the workpiece to be cut out, the already cut parts, which are at a predefined maximum distance $Distance_{Max}$.

Further according to the invention, said maximum distance $Distance_{Max}$ may be calculated according to the following equation:

$$Distance_{Max} = 2 \times Cutting\ Diameter$$

wherein *Cutting Diameter* is the diameter of said cutting tool.

Always according to the invention, said step B3 may comprise the following sub-steps: performing a comparison cycle, starting from one side of the piece, with all the other sides of the same piece, starting from the contiguous one, determining whether the next side can be selected as a starting point with respect to the previous side, wherein if said next side is selected and taken as a reference, a subsequent comparison cycle is performed until the end of the comparisons starting from said selected side;

wherein the selection of one side is made sequentially according to:

the type of element, such that in the comparison between linear and arched sections, the linear section is chosen;

if a side is not determined by the type, then the distribution of the material on the side is considered, such that two sides are selected on the basis of one or more selected selection parameters; and

if a side is not determined by distribution, then the position of the side of the piece is considered, wherein the side is selected according to how the parts ($R_i$) are cut, selecting the side that guarantees the position based on the sequence of subsequent cuts.

Still according to the invention, obtaining said selected selection parameters may comprise the following steps: calculating the total linear length of the residual material on each side of a piece; calculating the area of the residual material on the side: area of the rectangles of the material that have a thickness other than 0, or that have cut portions; calculating the average thickness of residual material on each side by means of the weighted average of the thickness of the material between the portion of the uncut side, and the distance to the corresponding cut piece; and calculating the defined material coverage on each side as a percentage of the available material.

It is further object of the present invention a working center comprising a working surface, for supporting a panel to be cut into a plurality of pieces according to a cutting scheme, wherein said working surface comprises vacuum means for holding said panel in position, a bridge, movable along said working surface, having a crosspiece, a working unit, arranged movably on said bridge, having at least one working tool, such as a cutter and the like, to cut out said pieces of said panel (P) according to said cutting scheme, and a logic control unit, configured to move said bridge and said working unit to perform said cutting pattern by means of said working tool, wherein said working center is characterized in that said logic control unit is configured to move said bridge and said working unit according to the cutting method as defined above.

It is also object of the present invention a computer program comprising instructions which, when the program is executed by a computer, causes the computer to execute the steps of the method as defined above.

It is finally object of the present invention a computer-readable storage medium comprising instructions which, when executed by a computer, cause the computer to execute the method as defined above.

**Brief description of the figures**

The present invention will be now described, for illustrative but not limitative purposes, according to its preferred embodiments, with particular reference to the figures of the enclosed drawings, wherein:

figure 1 shows a first perspective view of a working center for carrying out a nesting-type machining;
figure 2 shows a second perspective view of the working center according to figure 1;
figure 3 shows a panel showing the pieces to be obtained by milling, as determined by an optimization software;
figure 4 shows a panel to be divided into parts, in which guidelines are shown which indicate the cutting path;
figure 5 shows a scheme for calculating the grip factor of a piece;
figure 6 shows a first example of a starting point for cutting pieces of a panel;
figure 7 shows a second example of a starting point for cutting pieces of a panel;
figure 8 shows an exemplary cutting scheme for determining an optimized cutting sequence;
figure 9 shows the cutting diagram of figure 8, in which a calculation grid is shown;
figure 10 shows an exemplary cutting pattern for determining the starting piece for cutting;
figure 11 shows a further exemplary cutting pattern for determining the starting piece for cutting;
figure 12 shows a cutting diagram in which the intervals of material with respect to a piece of interest to be cut are determined;
figure 13 shows determining material coverage of one side of a workpiece to be cut;
figure 14 shows a first cutting pattern with gaps of material coupled to the piece to be cut;
figure 15 shows a second cutting pattern with gaps of material coupled to the piece to be cut;
figure 16 shows a side view of a cutting path of a machining tool;
figure 17 shows a top view of the cutting path of figure 16;
figure 18 shows a section of the uncut part of the piece to be cut following the cutting of the initial side; And

figure 19 shows the cutting perimeter of the piece to be cut out.

## Detailed description

In the various figures, similar parts will be indicated with the same reference numbers.

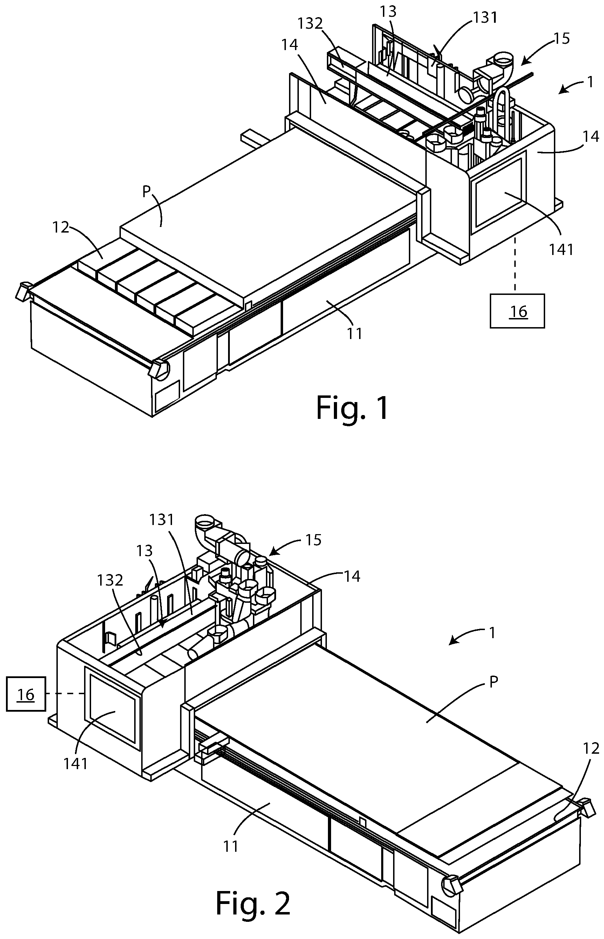

With reference to figures 1 and 2, a working center 1 can be seen configured for carrying out nesting-type operations.

In particular, the working center 1 comprises a base 11, a working surface 12, on which the panel P to be cut or worked in general can be arranged, a bridge 13, movable along the base 11, so as to overlap the surface working surface 12, on which the panel P to be machined can be arranged, and a protecting cabin 14, arranged around the bridge 13.

The working surface 12 comprises means for the vacuum (not shown in the figures), on which a sacrificial panel can be arranged, suitable for allowing the transpiration of the vacuum, to keep the panel to be worked P in position.

The protecting cabin 14 has the main purpose of preventing chips or machining scraps, caused by the high-speed rotation of the machining tools, from hitting a user. The protecting cabin 14 also has a window 141, to allow visual control of the machining.

The bridge 13 comprises a cross member 131 and guide means 132.

Furthermore, the machining center 1 also comprises a working unit 15, arranged movably on said bridge 13, and in particular coupled slidingly to the guide means 132, so as to be movable along a direction transverse to that of development of the base 11.

Once the panel P to be machined is arranged on the working surface 12, i.e. on the sacrificial panel (not shown in the figure), movement along the X and Y axes of the bridge 13 and of the working unit 15 allows, for example, the cutter (not shown in the figures) installed on the working unit 15, to cut out the parts from the panel P according to a logical cut, calculated by a computer program of known type, by means of a logic control unit 16, which also performs a computer program based on an improved panel cutting method as described below.

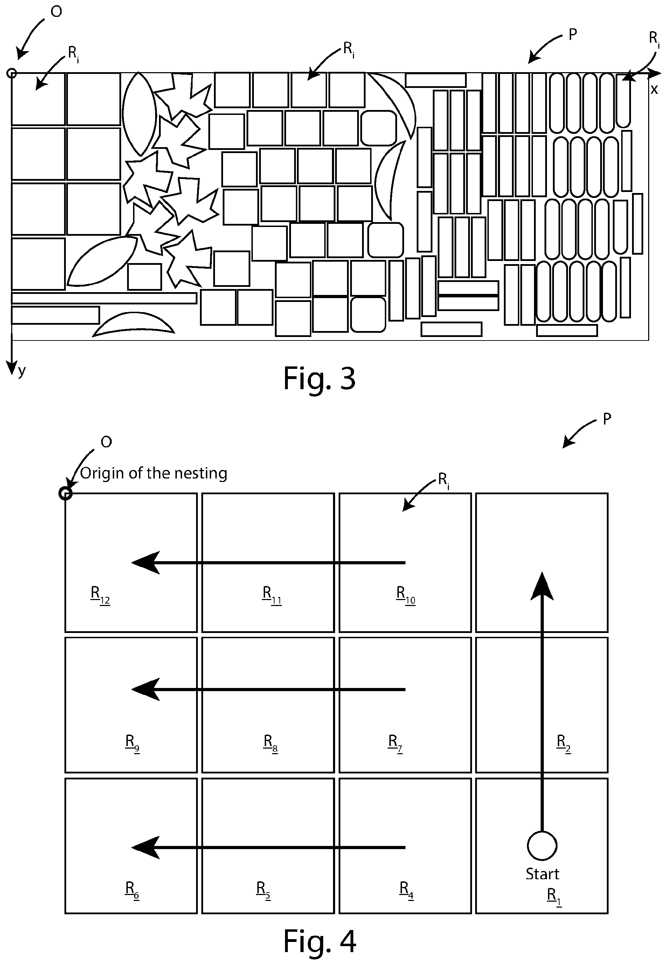

With reference now to figure 3, a cutting scheme or nesting scheme of a panel P can be observed. As can be seen, the panel P is divided into a plurality of pieces $R_i$, having different shapes, some even irregular.

The panel P is arranged with respect to a reference of the working surface 12, called the nesting angle O. Basically, said nesting angle O is nothing more than a pre-set abutment point for the panel P to be machined, which is also used as a reference system. The nesting angle O is the point where the vacuum grip is greatest.

Furthermore, the points of the plane can be referred to with respect to a Cartesian plane according to the axes indicated with X and Y, which are arranged precisely in correspondence with the sides of the plane. In this case, the nesting angle O coincides with the origin of the Cartesian plane. In other embodiments, other reference systems may be used.

By means of the aforementioned reference system, the machining unit, which the working center is equipped with, together with the data relating to the logical cut of the panel P, can report and dispose of the position on the working surface 12 of the panel P and, therefore, of the various parts $R_i$ to cut out.

To maximize the hold of the various pieces $R_i$ when they are cut out from panel P, three main procedures or steps are mainly used, namely a procedure for defining the cutting sequence by proximity, a procedure for defining the automatic starting or initial point, and a procedure for defining the progressive cutting strategy. Each of the above procedures is described below.

## Definition of the cutting sequence by proximity

With reference to figure 4, a first simple example of the proximity cutting algorithm is shown, in order to generally understand the algorithmic logic of this procedure.

With a cutting pattern or pattern very regular like the one shown in said figure 4, it is started from the piece numbered $R_1$, in correspondence to the point opposite to the nesting origin O, which is the point, as mentioned, where the vacuum grip is generally less, the external edges are followed, indistinctly proceeding horizontally or vertically, until arriving at the final piece $R_{12}$ placed at the origin or at the nesting angle.

In other words, the progressive numbering of the pieces $R_i$ is followed, i.e., $R_1$, $R_2$, $R_3$,..., $R_{12}$. In other words, the series of pieces in the vertical direction is executed first $R_1$, $R_2$, $R_3$, in order to cut out or obtain the pieces $R_i$ further away from the nesting angle O.

Subsequently, maintaining the same rule of cutting out the pieces $R_i$ further away from the nesting angle O, which have a smaller vacuum grip, but which at the same time have a greater number of sides or a portion of the perimeter coupled to other adjacent pieces.

In this connection, the obtaining in sequence of $R_{10}$, $R_{11}$, and $R_{12}$ after $R_3$ would be excluded because it would be leaving six pieces $R_i$ isolated and with a lower overall coupling to the working surface 12.

Therefore, the initial piece $R_1$ starting point is such because it has a position of less grip, which is however compensated, as mentioned, by having more material (of panel P) around it. As it is progressed, the pieces $R_i$ during the cutting steps will have on average less and less material around (or around) to keep them in position, but they will also be in positions of ever greater depression. This is basically the logic followed to maximize the minimum depression of a cutting sequence.

A difficulty in applying the indicated logic consists in determining the pieces to be cut along the directions, as the cutting patterns can also be very irregular in shape.

The design of the cutting sequence algorithm involves, in general terms, the following sub-problems, the solution of which is briefly described below:

- determination of gripping factor (grip factor);
- determination of the piece $R_i$ starting point for each cutting line;
- determination of pieces $R_i$ to be sequenced along the two directions, horizontal and vertical; and
- choose the cutting line using a criterion.

These sub-problems must be solved individually to be able to determine an overall solution.

As regards the determination of the grip factor (or grip factor), it is a matter of determining a metric capable of detecting the degree of grip at the moment in which the piece $R_i$ is stressed in the effective cutting step by the tool as it rotates. The grip factor is here encoded as a decimal number in the range [0, 1 ], where 0 corresponds to a minimum grip, and 1 to a maximum grip. Of course, other forms of coding may be provided in other embodiments.

In the example shown in figure 4, if the piece $R_8$ is cut first, this would have a grip factor equal to 1 since the entire perimeter, i.e. all four sides, are still uncut and coupled to the surrounding pieces; instead, if the piece $R_1$ is cut first, its grip factor would be a number close to 0.75, being surrounded on three sides by solid, i.e. by other pieces $R_i$ surrounding.

Obviously, the pieces $R_i$ can have free or irregular shapes. The grip factor algorithm proceeds by calculating an offset curve of a part, where the amount of offset is a parameter.

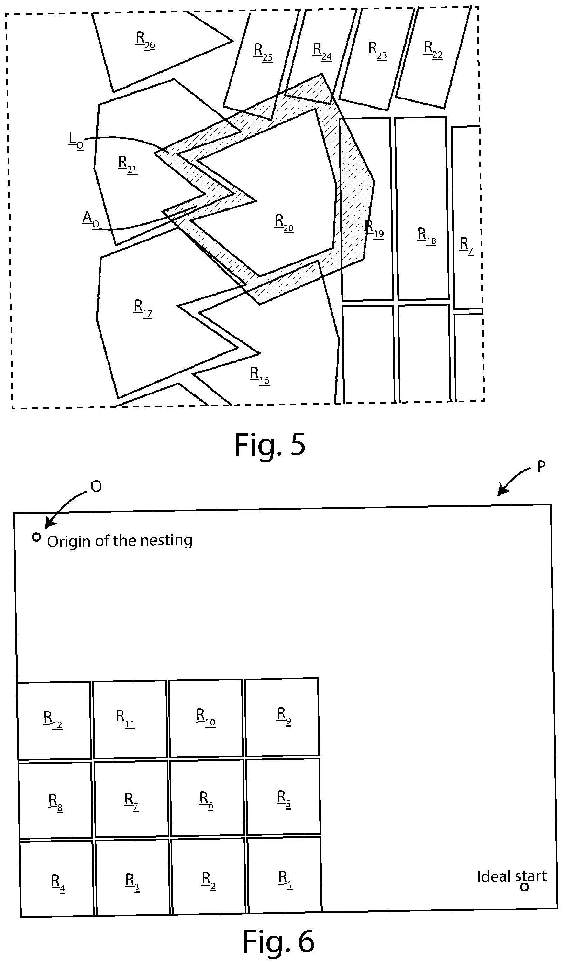

More specifically, referring to piece $R_{20}$ of figure 5, the offset curve is an increased perimeter of said piece $R_{20}$ to be cut $R_i$, indicated with the line Lo.

Between the line Lo and the effective boundary line of piece $R_{20}$, an offset area is underlying, denoted by Ao. Part of the offset area Ao is superimposed on the already cut neighboring piece, which in the case at issue is $R_{19}$.

The grip factor is calculated as the ratio of the offset area Ao relative to the uncut perimeter portion, i.e. superimposed on the uncut pieces and therefore still coupled to the reference piece (i.e. $R_{20}$ in the example shown), and the offset data area Ao overall. In the present case, since the pieces have small dimensions, a uniform area coupling is considered. In other embodiments, the coupling force can be modeled by a suitable function.

Therefore, in the part of the plane included between said offset curve Lo and the profile curve of the piece $R_i$, the areas made up of the empty parts, which have already been cut, are counted, to return the ratio between the sum of these areas and the offset total area Ao.

For performance reasons, panel P is discretized and the calculation of the areas is reduced to the sum of points of the resulting grid.

As regards the determination of the piece $R_i$ point of departure for each cutting line (vertical or horizontal), it must be considered that the ideal starting point does not always have a corresponding piece $R_i$. In some even worse cases, piece $R_i$ at the sweet spot is not the best piece for starting.

The starting point for the cut is by definition the one furthest away from or opposite the nesting angle O.

However, even a simple case like the example in figure 4, the first type of drawback occurs, as shown in figure 6. In this case, we have that in the starting point there is no piece $R_i$ to cut.

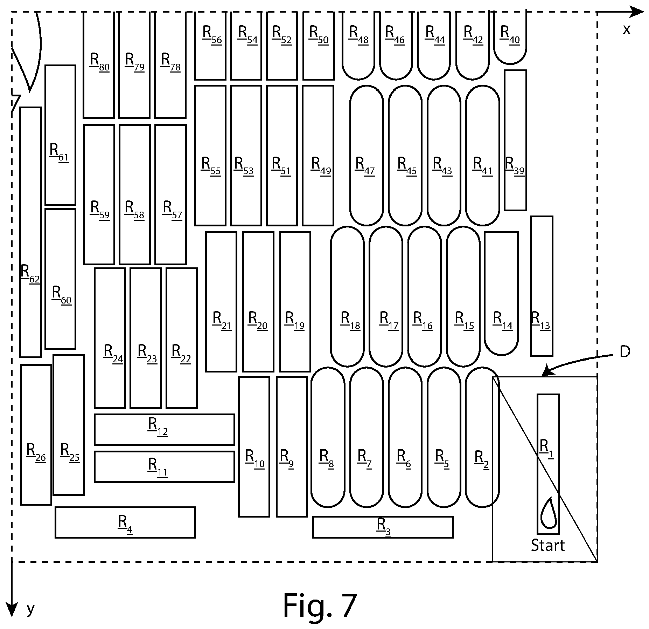

A case that presents the second type of drawback (starting point not at piece $R_i$ best, at least by far) is the one shown in figure 7. In this case, we have that piece $R_i$ at the ideal starting point is piece $R_1$, precisely because it is opposite to the nesting angle. However, if it is started from piece $R_3$ horizontally to obtain the pieces $R_3$, $R_4$, or it is desired to cut piece $R_{13}$ before piece $R_1$, there would not be a worse situation than starting from piece $R_1$. Therefore, there would be a "decisional" ambiguity in the algorithm.

For determining the starting piece $R_i$, the distance in a straight line from the origin of the is taken into account nesting and the distance in x (y) if the cutting line is along Y (X), to combine these two values in a count that chooses piece $R_i$ with a lower score.

In other words, having the cutting line, which can be parallel to the X or Y axis, for the choice of piece $R_i$ to be cut first, the distance $D_{Ri}$ is considered (X, Y) of each (discrete) point of each piece $R_i$ to be cut of the logical cut from the point opposite to the point of the panel P furthest from the nesting corner O, indicated with $D_{Ri}$ (x, y), and the distance of each of said points from the axis of the X or Y cutting line, indicated by $D_{Ri-X}$ (x, y) o $D_{Ri-Y}$ (x, y). The ratio between these distances is then calculated, which is defined as *Score,* calculated for the case in which the X direction is

$$ScorIt\ is_X = \frac{D_{RiX}(x,y)}{D_{Ri}(x,y)}$$

piece $R_i$ the starting point is the one that has the point with the lowest score.

Regarding the determination of pieces $R_i$ to be sequenced along the two horizontal and vertical directions, i.e., parallel to X and Y, in the first example shown in figure 4, it is immediate to establish the sequence of horizontal or vertical pieces starting from a given piece, simply on the basis of the criterion for which it is necessary to start from the farthest point from the nesting angle O.

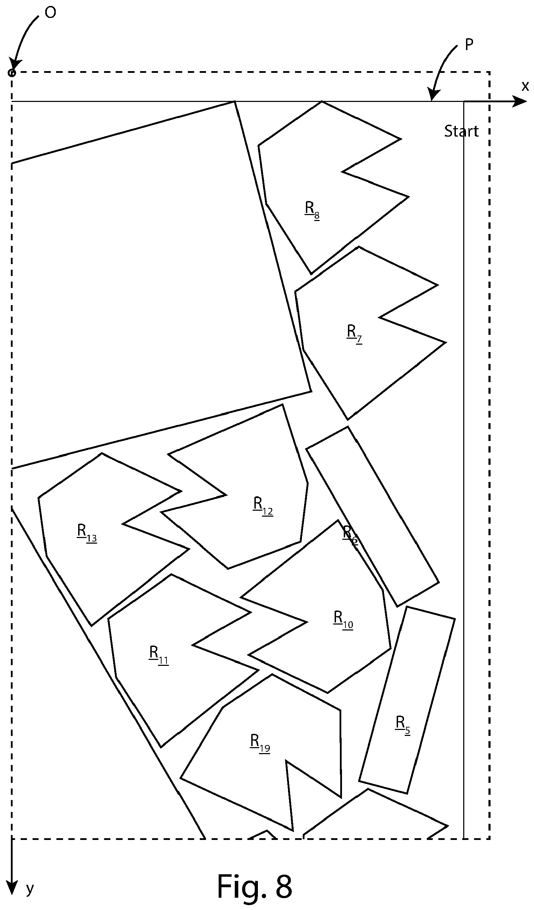

Considering a more complex case, such as the one shown in figure 8, it is supposed to start from the position indicated in the figure with "START", therefore from the piece numbered $R_8$, which as it can be seen has, among other things, an irregular shape.

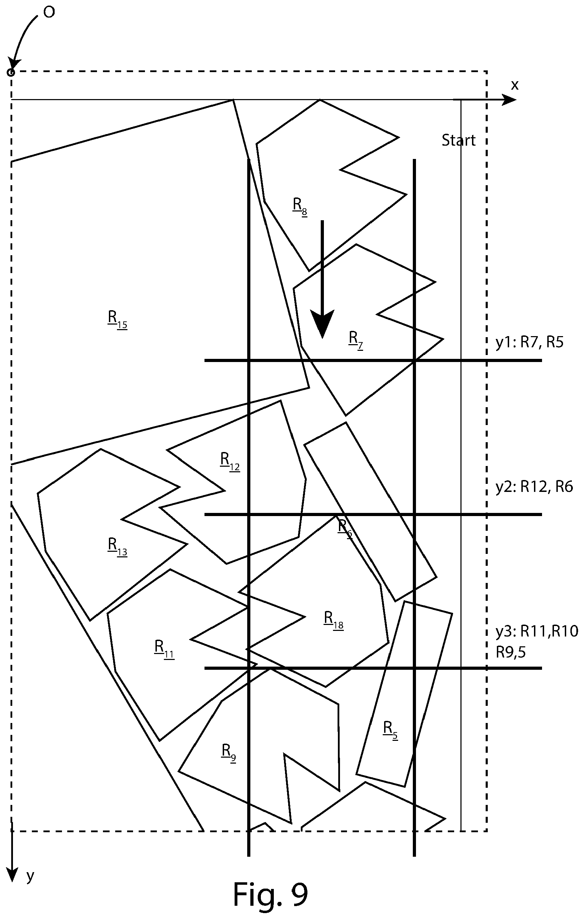

Considering figure 9, it can be observed that the vertical cutting line (parallel to the Y axis, as shown in figure 9 itself) includes, in the case shown, several pieces $R_i$ aligned on the same Y axis.

More specifically, the part of the plane included between the vertical lines at the ends of piece 8 is considered, as projected onto the X axis, perpendicular to the Y axis, thus proceeding downwards. It is then considered the different measures of ordinate y, i.e. $y_1$, $y_2$, and $y_3$ (still referring to figure 9) that meet the various pieces $R_i$, there is not one and only piece $R_i$ intersected with the corresponding horizontal line.

As can be seen, along $y_1$ pieces $R_7$ and $R_{15}$ meet, along $y_2$ pieces $R_2$ and $R_6$ meet, and along $y_3$ pieces $R_{11}$, $R_{11}$, $R_{10}$, $R_9$ and $R_5$ meet.

The piece $R_i$ chosen, therefore, is the one most external with respect to the origin of the nesting O, therefore, once the cutting line has been determined (Y in the example at issue), the one further and further away. In this way, a certain convexity of the part of the panel P will be maintained as much as possible, which remains after each cut, without leaving "holes", i.e. pieces $R_i$ with a low grip factor or below a certain predefinable threshold.

There is the step of proceeding along the Y (X) cutting line between two pieces aligned with a certain tolerance (which is a given parameter) in X (Y), choosing the piece $R_i$ outermost in X (Y) with respect to the nesting origin O.

In the example shown in figure 9, by applying the step described above, the sequence corresponding to the Y cutting line starting from piece $R_8$ would be: $R_8$, $R_7$, $R_6$, $R_{10}$, $R_5$.

However, the cutting sequence as indicated presents a further problem and, in this sense, the example shown in figures 8 and 9 is not accidental. When it comes to cutting piece $R_{12}$, in fact, the grip factor would be reduced due to having already cut piece $R_{10}$. In other words, with this sequence, it is had that piece $R_{12}$ would be too weakened, presenting a grip factor below a predefined threshold. It is considered that if piece $R_{12}$ is cut first, then piece $R_{10}$, and finally the piece $R_5$, the minimum grip factor of the sequence would be greater than the other sequence.

This is basically because the piece $R_{10}$ constitutes a "plug", as mentioned, between piece $R_{12}$ and piece $R_6$, i.e. it would weaken the next piece to be cut in the sequence. In order not to create fragmentation, a plug needs all the previous pieces it subtends to be executed, so that it can continue along the cutting direction (cutting line).

The algorithmic step indicated above is therefore specified in some embodiments considering that when proceeding along a cutting line, a "plug" is identified, the sequence must be terminated at the immediately preceding piece $R_i$, naturally on the basis of a predefined minimum grip factor threshold.

It is now considered the step of choosing the cutting line. When it is necessary to make a choice of the cutting line, generally parallel to one of the reference axes X or Y in the present embodiment of the method for the improved cutting of panels P. Therefore, criteria are adopted which are evaluated in a specific order.

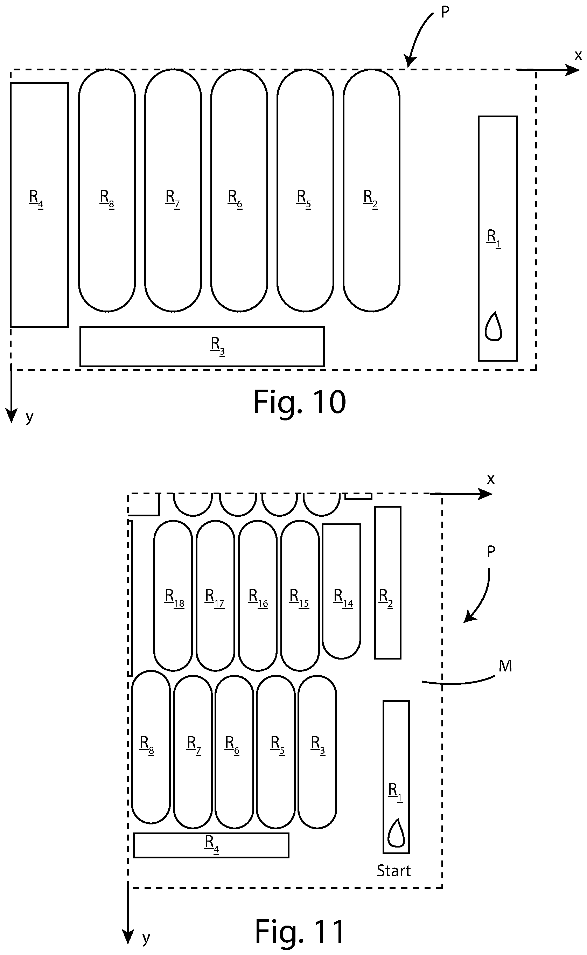

The choice of the direction takes place by evaluating and following the one that creates fewer "holes", or, as defined above, fewer pieces still to be cut in a back position with respect to the forward direction, as in the case shown in figures 10 and 11, which does not represent an optimal sequence, as, for example, cutting piece $R_4$ before the pieces from $R_8$ to $R_2$ would leave a substantial hole, formed by the part of the panel between the pieces $R_1$, $R_3$, and $R_4$, which would be greatly weakened. In other words, by cutting $R_4$ the portion of panel P given by the pieces $R_8$, $R_7$, $R_6$, $R_5$ and $R_2$ would be left weakened, as the various pieces would have a lower average grip factor value.

So if this were the result of the horizontal sequence, it would be preferable to choose the vertical sequence $R_1$, $R_2$.

In particular, the minimum grip factor of the longitudinal direction (Y) is calculated having first cut the transversal one (X) and vice versa. Of the two directions, the sequence that provides the highest overall minimum grip factor is chosen first.

In complicated situations where pieces $R_i$ are very "immersed" or nested one in the other, cutting a sequence inevitably affects the creation of "holes" for the next one, and, to understand which of the two to cut first, it would be necessary to "simulate" all possible future choices up to the end of the machining or at least until reaching the same machining status before the end (unlikely event).

The above entails a considerable computational load, which is often not negligible due to the processing times required. For this, an approach is adopted, which is based on the fact that the sequence initially identified and then not chosen will not change significantly, therefore, it is possible to carry out a rather independent a priori evaluation of the grip factor.

Finally, the overall deviation in X (Y) for transverse (longitudinal) sequences between the centers of gravity of the pieces in the given sequence is calculated.

Finally, this distance is normalized with respect to the number of pieces $R_i$ of the sequence, choosing the sequence with minimum distance.

Therefore, it is followed the principle that the shorter the distance, the more aligned the pieces will tend to be, the ideal being the situation where the pieces $R_i$ are perfectly aligned, as in the case of figure 4, where the pieces $R_i$ to be cut are all aligned.

Based on the above, the following main steps and sub-steps of the proximity cutting procedure as described above can be summarized:

- identification of starting points;

  ○ identify the starting point for the longitudinal sequence (Y direction);
○ identify the starting point for the transversal sequence (X direction);

- determination of ordered sequences;

○ calculating the ordered sequence for the longitudinal sequence with the starting piece found in step A;
○ calculating the ordered sequence for the transversal sequence (X) with piece $R_i$ starting point found in step A;

- choice of cutting line;

○ calculation of the metric for the two indicated sequences, longitudinal (Y) and transversal (X);
○ if the difference between the two metrics is lower than a certain threshold, proceed, otherwise choose the sequence with the best metric and go back to step A;
○ calculating the metric for the two sequences;
○ if the difference between the two is lower than a certain threshold, proceed, otherwise choose the sequence with the best metric and go back to point A;

- calculating the grip factor metric in the direction of the two sequences;

○ if the difference between the two is lower than a certain threshold, proceed, otherwise choose the sequence with the best metric (grip factor) and go back to point A;
○ fork and proceed by examining both sequences, without favoring one. At the end of this step, by virtue of the possible bifurcations that can occur when the partial solutions are comparable, a list or file of solutions will be obtained.

The final step is to evaluate the best solution.
The score used is that of the minimum sum of the grip factors of the individual pieces $R_i$ calculated following the order given by the sequence.
The algorithm at issue is, broadly speaking, a "pattern matching" algorithm, as can be seen.

**Definition of the automatic starting point+**

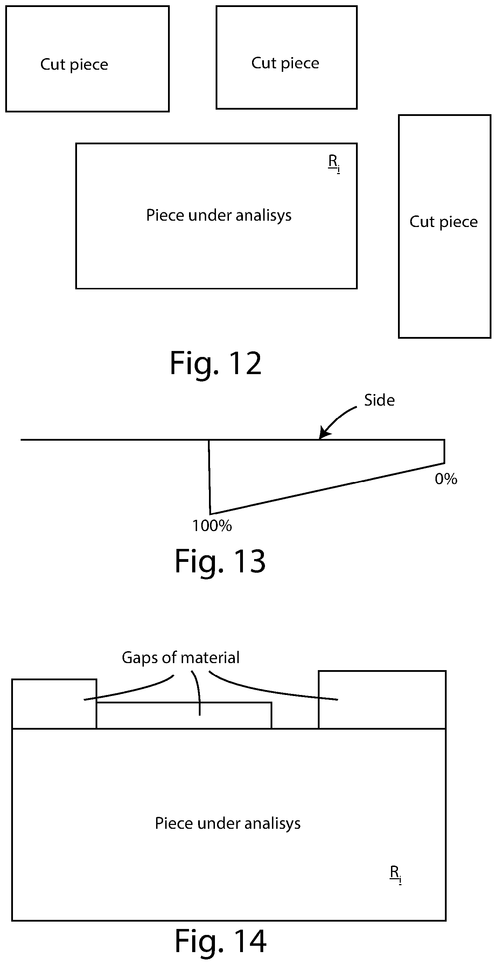

The strategy for calculating the automatic starting point of the cutting sequence has as its objective the choice of a starting point of cut that maximizes the amount of material held for each piece $R_i$ during the respective cut.
Preliminarily, there is the definition step of the material ranges of each specific piece $R_i$. In particular, the optimization of the initial position of the piece $R_i$ cut provides as a preliminary step the construction of the intervals of material available on each side of the piece $R_i$ chain.
Usually, it is not started from the edge of piece $R_i$ to be cut, also for stability reasons. It is tried to choose a starting point on the perimeter of the specific piece $R_i$, which allows keeping piece $R_i$ anchored as much as possible to a part of the uncut panel P.
Referring to figure 12, with respect to the geometric profile of the piece $R_i$ object of analysis, for each relative side the perimeter parts already cut are determined which are at a maximum predefined distance equal to

$$Distance_{Max} = 2 \times CutingDiameter$$

in which *Cutting Diameter* is the diameter of the tool (typically, for example, a cutter) used to cut the part, thus the distance of the cut material around the profile of the part.
For each of these, a rectangle of material is constructed (indicated with a slightly wavy line), which identifies the linear overlap along the side and the residual thickness of material between the 2 parts. If one side does not intercept any part already cut, entirely or partially, the gap of material has thickness equal to that of the *CutDiameter*. In case the side overlaps one side of the sheet, the material thickness is set to 0.
In other words, for each side of piece $R_i$ to be cut out for analysis, the already cut neighboring pieces are considered, the overlapping is projected onto the closest side, the aforementioned wavy rectangle is obtained, which represents the overlapping portion.
Then there is the evaluation of the best starting side. Once the material gaps on each side of the part profile $R_i$ have been calculated to analyze or to cut, it is moved on to the evaluation of the best side. By definition, the initial starting point is placed in the middle of a side and the distance is determined by the rotation of the tool. Generally the cutting direction is in agreement with the rotation direction of the tool, e.g., an endmill.
For each side it is calculated (with reference to figures 12, 13, 14, and 15):

- the total linear length of the residual material on the side: this is the sum of the lengths of the rectangles of material that have a thickness other than 0;
- the area of the residual material on the side: area of the rectangles of material that have a thickness other than 0;
- average thickness of residual material on the side: weighted average of the thickness of the rectangles of material; and
- material coverage: the percentage coverage of the material is defined on the side, with a scale that has 100% at the midpoint of the side and 0% at the initial point (see in particular figure 13).

These analyses make it possible to understand whether or not there is material available near the starting point of the cut and consequently whether the section, when it is performed at the end of the cut, will have material all the way through or not.

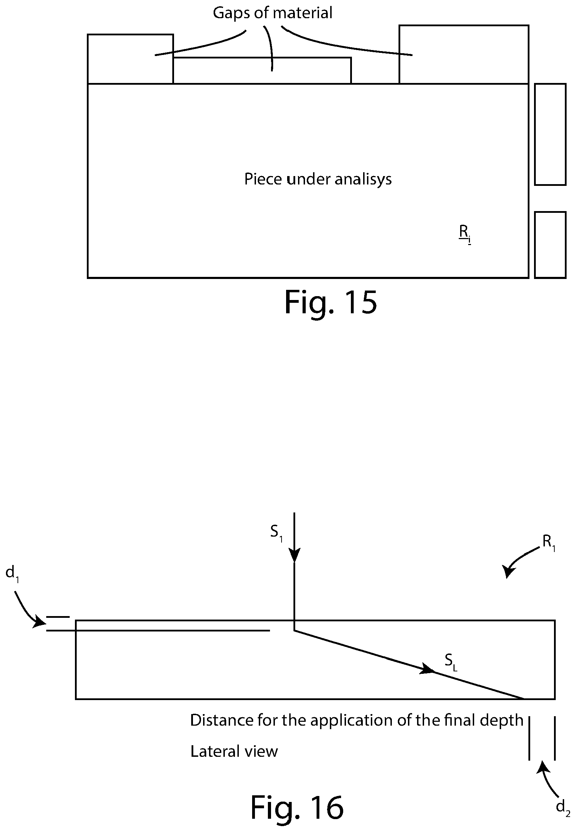

The same type of calculation of the material on the side is done by imagining that the current side is the last side to be cut (optimum side hypothesis; see figures 14 and 15).

Basically, the same calculations are carried out backwards, from the first element of the profile to the element under analysis according to the distance defined by the rotation of the tool.

This information allows detecting if the current side will be the last to be cut and how much material it will have available during the cut.

The selection step of the side of the piece $R_i$ is then carried out to cut out.

In particular, once the material on each side of the piece to be cut has been evaluated, each side is checked against each of the others until the best one is identified.

In essence, a comparison cycle is performed starting from the i-th side with all the other sides starting from the (i+1)-th (contiguous to the i-th side), up to the end, if the (i+1)-th side is better, it is taken as a reference, and the cycle starts again until the end of the comparisons.

The selection is made sequentially according to the following criteria:

1. type of element: in the comparison between the linear and arched section, the linear section is always taken, to avoid starting the cut on a curved section;
2. better distribution of the material on the side: the best side of the two under analysis is chosen based on the parameters calculated previously;
3. best side position: the best side is chosen according to how the $R_i$ parts will be cut, looking for the side that guarantees the best position keeping in mind how the cutting sequence definition algorithm works.

Regarding the advance from the vertex opposite to the reference one, the criteria are executed sequentially starting from criterion 1, if the best side is found the algorithm terminates, otherwise it passes to criterion 2, if the best side is found the algorithm terminates, otherwise it passes to criterion 3, which finally identifies the side.

**Definition of the progressive cutting strategy**

The cutting strategy of the nesting small parts $R_i$ has the objective of maximizing the uncut material during the actual cutting step, in order to keep as much material as possible in common with the uncut sheet or part of panel P.

Generally, for example considering an endmill, the cut is performed in a single pass along the profile of the part with a progressive in depth in the first section to increase the material in contact.

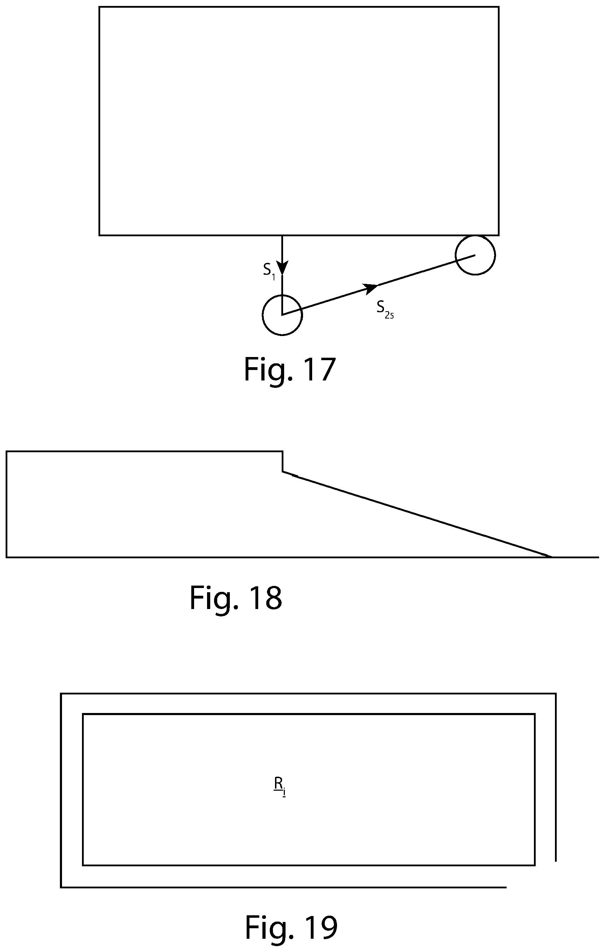

The procedure essentially consists of the following steps, which can be better understood by referring to figures 16 and 17, which show piece $R_i$ to be cut respectively in a side and top view:

- a vertical entry is made into the panel material P at the entry point at a non-through depth (entry depth $d_1$). In the figure, S denotes the sections of the path followed by the tool, e.g. an end mill. As can be seen, initially the tool carries out the section $S_1$, penetrating for an inlet depth indicated by $d_1$ in the piece to be cut out $R_i$, which is naturally smaller than the piece thickness $R_i$ to cut out;
- an advancement is carried out with a sort of linear ramp to greater depth up to a point that precedes the end of the section or cut (i.e., a distance for final depth application), as shown in figure 16. In this case, therefore, it is followed the section of the path $S_2$, reaching the end of the panel by depth, but not at the vertex, but before it for a finishing distance $d_2$, to avoid chipping the panel on the edge.

In the two sections $S_1$ and $S_2$, the path of the machining tool is not contained in a plane perpendicular to the part to be cut out $R_i$. In said first section $S_1$ the tool moves laterally away from the piece $R_i$ itself that is cutting, while in the second section $S_2$ the tool approaches the piece $R_i$, getting closer to the piece $R_i$ itself.

With reference to figure 1, a section of piece $R_i$ can be observed along the first side to be cut, after the tool has made the cuts along the sections $S_1$ and $S_2$. In particular, it is possible to observe, still in section, the surface of the material, which remains uncut.

In a preferred embodiment, this offset (the paths $S_1$ and $S_2$) can be moved laterally at the entry point with respect to the actual section point, to avoid the risk of chipping the panel P.

In this way, the first cutting side maintains a portion of unmachined material, which the shape shown in side view, as mentioned, schematically in figure 18, to allow a greater sealing area of the piece P.

Also referring to figure 19, the machining will advance for all the remaining profiles with a passing depth, and in the last section, i.e. the last side, it will complete the cut, working the intact semi-side (see figure 18) and the pre-machined semi-side, so as to properly finish the obtained part.

**Advantages**

An advantage of the cutting method according to the present invention is that it allows maximizing the grip of even small-sized pieces on the machine table, obtaining more precise sequential cuts.

A further advantage of the present invention is the fact that the cutting method can be easily implemented in a computer.

Another advantage of the present invention is that of allowing the installation of said cutting method in working centers not equipped with the same, such as to allow the possibility of upgrading them by using software.

The present invention has been described for illustrative but not limitative purposes, according to its preferred embodiments, but it is to be understood that modifications and/or changes can be introduced by those skilled in the art without departing from the relevant scope as defined in the enclosed claims.

**Claims**

1. Method for cutting a panel (P), such as a panel made of wood, plastic, fiberglass and the like, wherein said panel (P) is arranged on a plane wherein said panel (P) has to be cut into a plurality of pieces ($R_i$), and wherein for each piece ($R_i$) to be cut by means of a cutting tool, such as a cutter and similar, said method comprises the step of:

   B. determining the starting point of a cutting path of each piece ($R_i$), so as to maximize the holding of said piece ($R_i$) during its cutting.

2. Method according to the preceding claim, **characterized in that** said step B comprises, for each piece ($R_i$) to be cut out, the following sub-steps:

   B1. determining a starting point of the cut;
   B2. defining the material surrounding ranges; and
   B3. selecting the starting side of the cut.

3. Method according to the preceding claim, **characterized in that** in said step B1 the initial cutting point is the central point of one side of the piece (Ri).

4. Method according to any one of claims 2 or 3, **characterized in that** said step B2 comprises the step of determining, for each side of the workpiece (Ri) to be cut out, the already cut parts, which are at a predefined maximum distance $Distance_{Max}$.

5. Method according to the preceding claim, **characterized in that** said maximum distance $Distance_{Max}$ is calculated according to the following equation:

$$Distance_{Max} = 2 \times Cutting\ Diameter$$

   wherein *Cutting Diameter* is the diameter of said cutting tool.

6. Method according to any one of claims 2-5, **characterized in that** said step B3 comprises the following sub-steps:

   performing a comparison cycle, starting from one side of the piece ($R_i$), with all the other sides of the same piece ($R_i$), starting from the contiguous one, determining whether the next side can be selected as a starting point with respect to the previous side, wherein if said next side is selected and taken as a reference, a subsequent comparison cycle is performed until the end of the comparisons starting from said selected side;
   wherein the selection of one side is made sequentially according to:

   the type of element, such that in the comparison between linear and arched sections, the linear section is chosen;
   if a side is not determined by the type, then the distribution of the material on the side is considered, such that two sides are selected on the basis of one or more selected selection parameters; and
   if a side is not determined by distribution, then the position of the side of the piece ($R_i$) is considered, wherein the side is selected according to how the parts ($R_i$) are cut, selecting the side that guarantees the position based on the sequence of subsequent cuts.

7. Method according to the preceding claim, **characterized in that** obtaining said selected selection parameters comprises the following steps:

   calculating the total linear length of the residual material on each side of a piece ($R_i$);
   calculating the area of the residual material on the side: area of the rectangles of the material that have a thickness other than 0, or that have cut portions;
   calculating the average thickness of residual material on each side by means of the weighted average of the thickness of the material between the portion of the uncut side, and the distance to the corresponding cut piece; and
   calculating the defined material coverage on each side as a percentage of the available material.

8. Working center (1) comprising

   a working surface (12), for supporting a panel (P) to be cut into a plurality of pieces ($R_i$) according to a cutting scheme, wherein said working surface (12) comprises vacuum means for holding said panel (P) in position,
   a bridge (13), movable along said working surface (12), having a crosspiece (131),
   a working unit (15), arranged movably on said bridge (13), having at least one working tool, such as a cutter and the like, to cut out said pieces ($R_i$) of said panel (P) according to said cutting scheme, and

a logic control unit (16), configured to move said bridge (13) and said working unit (15) to perform said cutting pattern by means of said working tool,

wherein said working center (1) is **characterized in that** said logic control unit (16) is configured to move said bridge (13) and said working unit (15) according to the cutting method according to any one of claims 1-7.

9. A computer program comprising instructions which, when the program is executed by a computer, causes the computer to execute the steps of the method according to any one of claims 1-7.

10. A computer-readable storage medium comprising instructions which, when executed by a computer, cause the computer to execute the method steps according to any one of claims 1-7.

Fig. 1

Fig. 2

Fig. 3

Fig. 4

Fig. 5

Fig. 6

Fig. 7

Fig. 8

Fig. 9

P

x

R₄ R₈ R₇ R₆ R₅ R₂ R₁

R₃

y

## Fig. 10

x

R₁₈ R₁₇ R₁₆ R₁₅ R₁₄ R₂

P

M

R₈ R₇ R₆ R₅ R₃

R₁

R₄

Start

y

## Fig. 11

Cut piece

Cut piece

$R_i$

Piece under analisys

Cut piece

**Fig. 12**

Side

0%

100%

**Fig. 13**

Gaps of material

Piece under analisys

$R_i$

**Fig. 14**

Gaps of material

Piece under analisys

R$_i$

# Fig. 15

S$_1$

R$_1$

d$_1$

S$_L$

Distance for the application of the final depth

Lateral view

d$_2$

# Fig. 16

$S_1$

$S_{2s}$

Fig. 17

Fig. 18

$\underline{R}_i$

Fig. 19

Europäisches
Patentamt

European
Patent Office

Office européen
des brevets

# EUROPEAN SEARCH REPORT

**Application Number**

EP 23 18 4430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 23 01 736 A1 (HUGHES AIRCRAFT CO) 2 August 1973 (1973-08-02) | 1-6 | INV. B27M1/08 |
| A | * paragraphs [0020], [0021], [0095], [0132] – [0136], [0146], [0123] * * figures 11,12 * | 7-10 | B23D59/00 B23K7/10 B27B5/06 |
| X | EP 0 455 095 A1 (GIBEN IMPIANTI SPA [IT]) 6 November 1991 (1991-11-06) | 1,2,8-10 | |
| A | * abstract * * column 4, line 44 – column 5, line 21 * * column 3, line 33 – column 3, line 48 * * column 2, lines 37-48 * | 3-7 | |
| X | US 2013/325165 A1 (SONG JIANPING [US]) 5 December 2013 (2013-12-05) | 1,2 | |
| A | * claim 1 * * figure 2 * | 3-10 | |
| X | US 4 907 164 A (GUYDER MARGARET K [US]) 6 March 1990 (1990-03-06) * claims; figures * | 1,2 | |
| X | US 2010/087949 A1 (COLEMAN GLENN [US] ET AL) 8 April 2010 (2010-04-08) | 1,2 | TECHNICAL FIELDS SEARCHED (IPC) B27M B28D |
| A | * claims; figures * | 3-10 | B23K B23D |
| X | WO 96/08752 A2 (CIMPLUS INC [US]) 21 March 1996 (1996-03-21) | 1,2 | B27B |
| A | * claims; figures * | 3-10 | |

The present search report has been drawn up for all claims

| Place of search | Date of completion of the search | Examiner |
|---|---|---|
| The Hague | 30 August 2023 | Hamel, Pascal |

## ANNEX TO THE EUROPEAN SEARCH REPORT
## ON EUROPEAN PATENT APPLICATION NO.

EP 23 18 4430

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2023

| Patent document cited in search report | | Publication date | Patent family member(s) | | Publication date |
|---|---|---|---|---|---|
| DE 2301736 | A1 | 02-08-1973 | BE | 794242 A | 16-05-1973 |
| | | | CH | 547157 A | 29-03-1974 |
| | | | DE | 2301736 A1 | 02-08-1973 |
| | | | FR | 2173951 A1 | 12-10-1973 |
| | | | GB | 1382541 A | 05-02-1975 |
| | | | IT | 976922 B | 10-09-1974 |
| | | | JP | S4882491 A | 05-11-1973 |
| | | | NO | 139420 B | 27-11-1978 |
| | | | SE | 414465 B | 04-08-1980 |
| EP 0455095 | A1 | 06-11-1991 | AT | E112516 T1 | 15-10-1994 |
| | | | DE | 69104408 T2 | 09-02-1995 |
| | | | EP | 0455095 A1 | 06-11-1991 |
| | | | ES | 2061106 T3 | 01-12-1994 |
| | | | IT | 1238754 B | 03-09-1993 |
| US 2013325165 | A1 | 05-12-2013 | CN | 104364722 A | 18-02-2015 |
| | | | CN | 107688323 A | 13-02-2018 |
| | | | EP | 2856267 A1 | 08-04-2015 |
| | | | JP | 6434402 B2 | 05-12-2018 |
| | | | JP | 2015521333 A | 27-07-2015 |
| | | | US | 2013325165 A1 | 05-12-2013 |
| | | | US | 2015205294 A1 | 23-07-2015 |
| | | | US | 2018024531 A1 | 25-01-2018 |
| | | | WO | 2013181392 A1 | 05-12-2013 |
| US 4907164 | A | 06-03-1990 | NONE | | |
| US 2010087949 | A1 | 08-04-2010 | US | 2010087949 A1 | 08-04-2010 |
| | | | US | 2013144426 A1 | 06-06-2013 |
| WO 9608752 | A2 | 21-03-1996 | CA | 2175594 A1 | 21-03-1996 |
| | | | CN | 1137829 A | 11-12-1996 |
| | | | EP | 0727058 A1 | 21-08-1996 |
| | | | JP | H09507439 A | 29-07-1997 |
| | | | WO | 9608752 A2 | 21-03-1996 |

EPO FORM P0459

For more details about this annex : see Official Journal of the European Patent Office, No. 12/82